(19) Europäisches Patentamt
European Patent Office
Office européen des brevets

(11) **EP 2 619 481 B1**

(12) **EUROPÄISCHE PATENTSCHRIFT**

(45) Veröffentlichungstag und Bekanntmachung des Hinweises auf die Patenterteilung:
**10.01.2018 Patentblatt 2018/02**

(21) Anmeldenummer: **11741197.5**

(22) Anmeldetag: **03.08.2011**

(51) Int Cl.:
***F16H 61/688*** (2006.01)

(86) Internationale Anmeldenummer:
**PCT/EP2011/063344**

(87) Internationale Veröffentlichungsnummer:
**WO 2012/038136 (29.03.2012 Gazette 2012/13)**

(54) **VERFAHREN ZUR KENNLINIENADAPTION VON KUPPLUNGEN IN EINEM TEILDOPPELKUPPLUNGSGETRIEBE EINES FAHRZEUGS**

METHOD FOR ADAPTING A CHARACTERISTIC CURVE OF CLUTCHES IN A PARTIAL DOUBLE-CLUTCH TRANSMISSION OF A MOTOR VEHICLE

PROCÉDÉ D'ADAPTATION DE LA COURBE CARACTÉRISTIQUE D'EMBRAYAGES DANS UNE DEMI-BOÎTE DE VITESSES À DOUBLE EMBRAYAGE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2010 DE 102010041303**

(43) Veröffentlichungstag der Anmeldung:
**31.07.2013 Patentblatt 2013/31**

(73) Patentinhaber: **ZF Friedrichshafen AG 88046 Friedrichshafen (DE)**

(72) Erfinder: **MAIR, Roland 88069 Tettnang (DE)**

(56) Entgegenhaltungen:
DE-A1-102005 033 027    DE-A1-102006 054 281
DE-A1-102008 008 496    DE-A1-102008 043 384
US-A- 4 966 048

**Beschreibung**

Die Erfindung betrifft ein Verfahren zur Kennlinienadaption von Kupplungen in einem Teildoppelkupplungsgetriebe gemäß dem Oberbegriff des Patentanspruchs 1.

Aus Komfort- und Leistungsgründen werden in Nutzfahrzeugen zunehmend automatisierte Getriebe mit Lastschaltfähigkeiten eingesetzt. Dabei sind zugkraftunterbrechungsfrei schaltende Doppelkupplungsgetriebe besonders attraktiv. Getriebestrukturen von Doppelkupplungsgetrieben für Nutzfahrzeuge sind beispielsweise aus der DE 10 2005 033 027 A1 und der DE 10 2006 054 281 A1 bekannt. Solche automatisierten Schaltgetriebe umfassen ein Vorgelegegetriebe oder mehrere antriebstechnisch hintereinander angeordnete Vorgelege-Getriebegruppen und gegebenenfalls ein antriebstechnisch nachgeordnetes Planetengetriebe.

Die Gänge in einem klassischen Doppelkupplungsgetriebe sind in der Regel in zwei Getriebezweigen in eine gerade und eine ungerade Ganggruppe unterteilt, wobei jeder Gruppe eine Kupplung der Doppelkupplung zugeordnet ist. Über die Doppelkupplung ist eine sequenzielle, quasi zugkraftunterbrechungsfreie Schaltfolge realisierbar, wobei jeweils der folgende Gang in dem aktuell lastfreien Getriebezweig vorgewählt ist und der Gangwechsel durch ein überschneidendes Betätigen beider Kupplungen erfolgt. Der Kraftfluss der Gänge kann in konventioneller Weise über eine Antriebswelle und eine Abtriebswelle laufen oder er kann sich über mehrfach wechselnde Wellen durch das Getriebe winden.

Gegenüber reinen Lastschaltautomaten in Planetenbauweise haben automatisierte Schaltgetriebe Wirkungsgrad- und Kostenvorteile. Allerdings steigen mit zunehmender Gangzahl die Baugröße sowie der Konstruktionsaufwand und somit die Herstellungskosten. Da Nutzfahrzeuggetriebe, je nach Einsatzgebiet, in der Regel zur Verwirklichung einer bestimmten Getriebespreizung und für einen effizienten Betrieb eine relativ hohe Gangzahl benötigen, ist es insbesondere für Nutzfahrzeuganwendungen zweckmäßig, auch kostengünstigere und kompakt bauende Getriebe-Mischformen, so genannte Teildoppelkupplungsgetriebe, zu betrachten. Bei diesen Teildoppelkupplungsgetrieben ist neben einem lastschaltenden Getriebe oder Getriebeteil mit einer Doppelkupplung ein konventionelles, also zugkraftunterbrechend schaltendes Getriebeteil, beispielsweise eine Hauptgetriebegruppe bzw. ein nachgelagertes, zugkraftunterbrechend schaltendes Getriebe, beispielsweise ein Verteilergetriebe oder Achsgetriebe, angeordnet. Bei solchen Teildoppelkupplungsgetrieben sind daher Zugkraftunterbrechungen bei bestimmten Gangwechseln zu akzeptieren.

Ein Verfahren zur Kupplungskennlinienadaption eines automatisierten Doppelkupplungsgetriebes ist aus der DE 10 2008 043 384 A1 bekannt.

Die DE 10 2008 008 496 A1, welche alle Merkmale des Oberbegriffs gemäß Anspruch 1 offenbart, zeigt beispielsweise ein Stufengetriebe, das in seiner Funktionsweise einem Teildoppelkupplungsgetriebe entspricht. Das Stufengetriebe weist eine erste und eine zweite Eingangswelle auf, die über jeweils eine Kupplung einer Doppelkupplung mit einem Antriebsmotor verbindbar sind. Außerdem ist eine Vorgelegewelle vorhanden, an welche die zwei Eingangswellen über einen ersten bzw. einen zweiten Eingangszahnradsatz mit unterschiedlichen Übersetzungsverhältnissen angekoppelt sind. Eine Abtriebswelle ist wahlweise über verschiedene weitere Radsätze an die Vorgelegewelle ankoppelbar. Ein bidirektionaler Gangwechsel zwischen einem ersten Gang und einem zweiten Gang ist ohne weitere Schaltvorgänge durch ein überschneidendes Öffnen bzw. Schließen der beiden Kupplungen zugkraftunterbrechungsfrei möglich, da der Kraftfluss in diesen Gängen lediglich zwischen dem ersten und dem zweiten Eingangsradsatz wechselt, aber über denselben weiteren Radsatz zur Abtriebswelle verläuft. Die übrigen Gangwechsel erfordern ein Umschalten von beteiligten Gangkupplungen mit der Folge einer Zugkraftunterbrechung. Die Nachteile derartiger Zugkraftunterbrechungen zu verringern, ist Gegenstand einer weiteren Erfindung der Anmelderin.

Ein anderes Problem bei Teildoppelkupplungsgetrieben und anderen automatisierten Getrieben mit einer Doppelkupplung ist die Kennlinienadaption der Kupplungen, die in der Regel als Reibelemente ausgebildet sind. Dabei ist der Zusammenhang zwischen einer Kupplungsposition bzw. einem Kupplungsstellwegpunkt und dem übertragbaren Kupplungsmoment bekanntermaßen eine essenzielle Größe, die in Kennlinien bzw. Kennfeldern in einem Steuerungscomputer abgespeichert ist und einem Getriebesteuerungsverfahren zur Verfügung gestellt wird.

Ist die Kupplung beispielsweise zu weit geöffnet, können sich Anfahrvorgänge verzögern und das Fahrzeug gegebenenfalls zurückrollen. Ist die Kupplung hingegen zu weit geschlossen, kann ein zu starker Kriechbetrieb mit unbeabsichtigter Fahrzeugbewegung eintreten. Im Fahrbetrieb können Schaltvorgänge bei einer ungenauen Kenntnis der charakteristischen Kupplungspunkte (Zugpunkt, Mitnahmepunkt, Anlegepunkt etc.) mit Drehmomentstößen und/oder erhöhtem Verschleiß verbunden sein. Die Weg- und Drehmomentenverhältnisse der Kupplung können sich durch Temperatur-, Drehzahl-, Verscheiß- und Alterungseinflüsse ändern. Für eine gleichbleibend einwandfreie und komfortable Regelung sowie Funktionsweise der Doppelkupplung und des Getriebes ist daher eine regelmäßige Aktualisierung des Zusammenhangs zwischen der Kupplungsposition und dem Kupplungsmoment in einer Kennlinie oder Tabelle erforderlich.

Dieser Zusammenhang wird gemäß bekannten Verfahren durch einen Einlernprozess ermittelt, der sich im Wesentlichen die Gleichheit zwischen dem Motormoment und dem Kupplungsmoment während Schlupfphasen der Kupplung zu Nutze macht. Die Adaption kann immer dann erfolgen, wenn die betreffende Kupplung unter Last im Schlupf geschlossen wird. Dies ist grundsätzlich während Anfahrvorgängen oder nach Schaltungen möglich. Da bei Doppelkupplungsgetrieben während der Schaltungen die Kupplungen überschneidend im Einsatz sind, wobei eine eindeutige Kupplungsmomentbestimmung nicht möglich ist, entfallen die Schlupfphasen der Kupplung nach Schaltungen für die Kennlinienadaption. Somit stehen weniger Adaptionsgelegenheiten, insbesondere nur die Anfahrvorgänge zur Verfügung. Zudem wird bei Anfahrvorgängen meistens der gleiche Gang und die zugehörige Kupplung verwendet, so dass für die andere Kupplung auch die regulären Anfahrvorgänge als Adaptionsgelegenheiten weitgehend ausfallen. Insgesamt ergibt sich daraus das Problem, dass für beide Kupplungen der Doppelkupplung die Zuordnung von Kupplungsposition und Kupplungsmoment nicht mit ausreichender Häufigkeit und Qualität bestimmt werden kann.

Vor diesem Hintergrund liegt der Erfindung die Aufgabe zugrunde, ein Verfahren zur Kennlinienadaption von Kupplungen in einem Teildoppelkupplungsgetriebe eines Fahrzeuges anzugeben, dass eine zuverlässige und genaue Kupplungssteuerung sowie einen gleichbleibend hohen Schaltkomfort ermöglicht.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass bei Fahrzeugen mit einem Teildoppelkupplungsgetriebe, mit einem lastschaltenden Doppelkupplungsgetriebeteil und einem nachfolgenden zugkraftunterbrechend schaltenden konventionellen Hauptgetriebeteil, Betriebsphasen, in denen das Hauptgetriebe in Neutral geschaltet und somit der Antriebsmotor sowie das Doppelkupplungsgetriebe im Antriebsstrang von den angetriebenen Fahrzeugrädern abgekoppelt ist, genutzt werden können, um jeweils eine Kennlinienadaption bei einer der beiden Kupplungen oder nacheinander bei beiden Kupplungen durchzuführen. Dies soll über ein Verspannen der beiden Kupplungen realisiert werden, wobei jeweils eine Kupplung im Schlupf und die andere Kupplung vorzugsweise im Haften betrieben wird, so dass ein auf den Antriebsmotor wirkendes Lastmoment erzeugt und dabei an der schlupfenden Kupplung ein Einlernprozess der relevanten Kupplungswegpunkte durchgeführt werden kann.

Demnach geht die Erfindung aus von einem Verfahren zur Kennlinienadaption von Kupplungen in einem Teildoppelkupplungsgetriebe eines Fahrzeugs, beispielsweise eines Nutzfahrzeugs, mit einem als ein Doppelkupplungsgetriebe ausgebildeten ersten Teilgetriebe, das eine Doppelkupplung mit einer ersten Kupplung und einer zweiten Kupplung aufweist, welche mit einem Antriebsmotor wirkverbindbar sind, und mit einem dem Doppelkupplungsgetriebe in einem Antriebsstrang antriebstechnisch nachgeordneten, als zugkraftunterbrechend schaltendes Hauptgetriebe ausgebildeten zweiten Teilgetriebe. Zur Lösung der gestellten Aufgabe sieht die Erfindung vor, dass die Kennlinienadaption der ersten und zweiten Kupplung mit Hilfe einer Verspannung der beiden Kupplungen durchgeführt wird, wobei sich das Hauptgetriebe in einer Neutralstellung befindet.

Das Verfahren kann vorteilhaft sowohl bei Anordnungen angewandt werden, die ein Getriebe mit einem motorseitigen Doppelkupplungsgetriebeteil und einem nachfolgenden konventionellen, d.h. zugkraftunterbrechend schaltenden Getriebeteil aufweisen, als auch bei Anordnungen, die ein vollständiges Doppelkupplungsgetriebe und ein nachgelagertes konventionelles Getriebe, beispielsweise ein schaltbares Verteiler- oder Achsgetriebe, umfassen. Unter einem Teildoppelkupplungsgetriebe werden beide Anordnungsvarianten verstanden.

Jeder Kupplung des Doppelkupplungsgetriebes bzw. Doppelkupplungsgetriebeteils ist ein jeweils ein- oder mehrgängiger Doppelkupplungsgetriebezweig zugeordnet. Im Folgenden wird unter Doppelkupplungsgetriebe sowohl ein vollständiges Getriebe als auch ein Getriebeteil verstanden. Als Hauptgetriebe wird ein Getriebe oder Getriebeteil verstanden, welches im Kraftfluss nach dem Doppelkupplungsgetriebe bzw. Doppelkupplungsgetriebeteil folgt und in seiner Ausführung einem klassischen Stufengetriebe entspricht, welches unsynchronisiert mit Klauenschaltelementen oder synchronisiert mit Synchronschaltpaketen ausgebildet sein kann.

Durch das erfindungsgemäße Verfahren werden die Nachteile einer ungenauen Ansteuerung einer Doppelkupplung aufgrund unzureichender Einlernphasen vermieden, so dass insbesondere für Nutzfahrzeuge ein Getriebe als ein vergleichsweise kostengünstiges und kompakt bauendes Teildoppelkupplungsgetriebe konzipiert werden kann, welches weitgehend die Funktionalität und den Komfort eines lastschaltenden Doppelkupplungsgetriebes besitzt, dabei aber eine bessere Kupplungssteuerung ermöglicht.

Die Kennlinienadaption kann vorteilhaft durchgeführt werden, indem jeweils eine der beiden Kupplungen im Haften betrieben wird, während die andere Kupplung in Schließrichtung betätigt wird. Durch ein Verspannen der Doppelkupplung wird dabei ein für die Einstellung der Kupplung notwendiges Lastmoment bereitgestellt. Dies hat jedoch keine Rückwirkungen auf das Fahrzeug, da der Kraftfluss zum Abtrieb durch die Neutralschaltung im Hauptgetriebe unterbrochen ist. Somit sind durch die Kennlinienadaption keinerlei Komforteinbußen bedingt.

Bei einem Teildoppelkupplungsgetriebe treten Fahrsituationen, in denen das Hauptgetriebe nach Neutral geschaltet und eine Kennlinienadaption durchgeführt werden kann, vergleichsweise häufig auf, beispielsweise immer kurz nach dem Einschalten der Zündung und dem Motorstart des Antriebsmotors oder bei jeder durch den Fahrer veranlassten Neutralschaltung bei laufendem Antriebsmotor oder bei jeder durch das Getriebe selbsttätig herbeigeführten Neutralschaltung, beispielsweise im Fahrzeug-Stillstand oder beim Rollen. Die Kennlinienadaption kann bei jeder Adaptionsgelegenheit, aber auch nach bestimmten vorgegebenen Zyklen durchgeführt werden.

Die Kennlinienadaption kann vorteilhaft in mehreren Schritten durchgeführt werden, wobei ein jeweiliger Zwischenstand in einem flüchtigen oder permanenten elektronischen Speicher abgelegt wird. Erfolgt beispielsweise während eines Adaptionszyklus eine kupplungsrelevante Fahreranforderung, die eine Motor- und/oder Getriebebeeinflussung zur Folge hat, kann die Adaption abgebrochen bzw. unterbrochen und die Kupplungskontrolle dem Fahrer übergeben werden. Der Abbruchpunkt der Kennlinienadaption, d.h. der bereits aktualisierte Teil der Kennlinie, wird dann gespeichert, so dass bei der nächsten Adaptionsgelegenheit an dieser Stelle fortgefahren werden kann. Aus zwei oder mehr solchen Adaptionsphasen ergeben sich dann die vollständigen Kennlinien beider Kupplungen.

Außerdem kann vorgesehen sein, dass bedarfsweise mit Hilfe eines Diagnosegerätes bzw. einer Diagnoseeinrichtung eine Adaptionsnotwendigkeit geprüft und erforderlichenfalls in zeitlicher Nähe während einer folgenden geeigneten Neutralschaltung des Hauptgetriebes eine vollständige Kennlinienadaption durchgeführt wird. Demnach können, außer bei den regulären Adaptionsgelegenheiten, während geeigneter Neutralschaltungen im Fahrzeugbetrieb gezielt Kennlinienadaptionen herbeigeführt werden, indem über eine Diagnoseeinrichtung, insbesondere über ein fahrzeugexternes Diagnosegerät, beispielsweise im Rahmen eines Serviceintervalls, die Kennlinienadaption der Doppelkupplung angefordert wird.

Dies kann insbesondere dann der Falls sein, wenn erkannt wird, dass keine Adaptionsdaten im Speicher (Datentabelle im EPROM eines zugeordneten Fahrzeug-Steuergerätes) vorhanden sind, da bisher noch keine Adaption erfolgreich durchgeführt wurde, oder dass der letzte Adaptionszyklus einen längeren Zeitraum zurückliegt (Zeitmarkierung im EPROM), oder dass eine Fehlerüberwachung, beispielsweise durch einen Vergleich von dem tatsächlichen Motordrehmoment und Kennlinienmoment bei einem Anfahrvorgang eine ungenaue Kupplungspositionierung festgestellt hat (Fehlereintrag im EPROM). Grundsätzlich sind auch fahrzeuginterne Diagnosen, durch die eine Adaptionsnotwendigkeit erkannt und eine Kennlinienadaption initiiert wird, möglich.

Der eigentliche Einlernprozess der jeweiligen Kupplung kann dann nach einer an sich bekannten Vorgehensweise erfolgen. Das erfindungsgemäße Verfahren erweitert diese Prozedur jedoch dahingehend, dass

a) die jeweils zu adaptierende Kupplung vorab ausgewählt wird,
b) ein Momentenverlauf bzw. Positionsverlauf der Doppelkupplung vorgegeben wird,
c) eine Berechnung des Kupplungsmomentes der schlupfenden Kupplung unter Berücksichtigung einer Wechselwirkung der beiden Kupplungen aufgrund der Verspannung beim Einlernen erfolgt, und
d) gegebenenfalls eine geeignete Gangkombination im Doppelkupplungsgetriebe für die Kupplungsadaption vorgewählt wird.

Demnach wird bei einer Kennlinienadaption zunächst die zur Adaption aktuell zur Verfügung stehende bzw. vorzugsweise als erste zu lernende Kupplung bestimmt. Die nicht zu adaptierende der beiden Kupplungen wird so positioniert, dass sie während des Einlernprozesses der Kennlinie der anderen Kupplung permanent haftet. Dazu kann die Kupplung vollständig geschlossen werden, oder soweit teilgeschlossen werden, dass sie durch die Wechselwirkung mit der zu adaptierenden Kupplung sicher nicht in Schlupf gebracht werden kann, oder soweit erforderlich, kontinuierlich in Schließrichtung nachgeführt wird. Anschließend wird die zu adaptierende Kupplung zur Ermittlung des Positions-Moment-Zusammenhangs in Schließrichtung betätigt. Das Kupplungsmoment kann aus dem zur Verfügung stehenden oder ermittelten Motordrehmomentwert und den Übersetzungsverhältnissen der Doppelkupplungsgetriebezweige berechnet werden.

Falls in zumindest einem der beiden Doppelkupplungsgetriebezweige mehrere Gänge zur Verfügung stehen, kann ein Gang vorgewählt werden, der durch die Übersetzungs- und Drehzahlverhältnisse zum Motor eine besonders schnelle, belastungsarme und/oder effiziente Kennlinienadaption der betreffenden Kupplung ermöglicht. Hinsichtlich der Kupplungsbelastung, der Adaptionszeit, der erzielbaren Genauigkeit und des darzustellenden Drehmomentbereiches, ist es vorteilhaft, die Kennlinienadaption abschnittsweise durchzuführen.

Der Reibenergieeintrag in die Kupplung kann insbesondere dadurch verringert werden, dass, soweit dies möglich ist, für unterschiedliche Drehmomentbereiche verschiedene Gänge im Doppelkupplungsgetriebe und damit möglichst kleine Differenzdrehzahlen an der Kupplung vorgewählt werden. Daher ist es außerdem vorteilhaft, wenn jeweils in einem Drehmomentbereich bzw. Kennlinienabschnitt immer beide Kupplungen adaptiert werden, um mit möglichst wenig adaptionsbedingten Gangwechseln im Doppelkupplungsgetriebe auszukommen.

Eine besondere Bedeutung kommt bei der Kennlinienadaption der Art der Durchführung des Schließvorgangs der Kupplung zu. Dazu kann vorgesehen sein, dass bei der Kennlinienadaption die Geschwindigkeit und/oder die Beschleunigung des Schließvorgangs der Kupplung, abhängig von relevanten Kennlinienabschnitten, Kennlinienstützstellen, Kupplungsbelastungen, Adaptionszeiten und/oder Adaptionsgenauigkeiten vorgegeben wird. Insbesondere kann vorgesehen sein, dass der Schließvorgang der Kupplung bei der Kennlinienadaption wahlweise kontinuierlich, gestuft, rampenartig oder einem anderem vorgegeben Verlauf folgend, durchgeführt wird.

Die jeweilige Gestaltung des Schließvorgangs hängt demnach von einer jeweiligen Zielsetzung ab. Soll beispielsweise nur ein Abschnitt der Kennlinie adaptiert werden, so ist es vorteilhaft, den Beginn dieses Stellweg-Abschnitts möglichst schnell anzufahren und anschließend mit stufenförmig oder langsam rampenartig ansteigender Geschwindigkeit zu durchfahren. Dabei soll die Einrückgeschwindigkeit zumindest so schnell gewählt werden, dass sich durch die Adaption selbst die Kupplung nicht so stark erhitzt, dass deren Reibwert sich ändert, wodurch das Adaptionsergebnis verfälscht werden könnte. Dementsprechend kann ein kleiner Adaptionsabschnitt langsamer und damit genauer durchfahren werden als ein größerer Abschnitt oder die gesamte Kennlinie. Grundsätzlich wird der Zusammenhang zwischen dem übertragenen Moment und der Kupplungsposition umso besser beobachtet werden können, je kleiner die Positionierungsgeschwindigkeit ist, da sich dabei eine quasistationäre Momentermittlung für kleine Positionsintervalle ergibt.

Da eine Kupplungskennlinie üblicherweise mit diskreten Stützstellen in einem Steuergerät abgespeichert ist, ist es besonders vorteilhaft, wenn nicht die komplette Kennlinie langsam kontinuierlich ermittelt wird, sondern vielmehr gezielt und schnell diese Stützstellen angefahren werden und an diesen Stellen die Position für einen bestimmten Zeitraum gehalten wird. Die Stützstellen können durch bestimmte Kupplungspositionen, beispielsweise Zugpunkt, Mitnahmepunkt, Anlegepunkt etc., oder durch entsprechende Kupplungsmomente definiert sein. Im Ergebnis wird dadurch vergleichsweise wenig Reibenergie in die Kupplung eingetragen und die Adaptionszeit insgesamt verkürzt, wobei gleichzeitig durch die temporäre Konstanz von Moment und Position während der Verharrungsphasen das Adaptionsergebnis verbessert wird, d.h. eine größere Genauigkeit der Kennlinie erreicht wird.

Das Adaptionsergebnis kann noch weiter verbessert und die Einstellung vereinfacht werden, indem während der Kennlinienadaption eine vorab bestimmte Drehzahl des Antriebsmotors konstant gehalten wird. Dadurch treten keine zusätzlich zu berücksichtigenden dynamischen Effekte auf. Die Motordrehzahl wird vor Beginn der Adaption zweckmäßigerweise so gewählt, dass der Antriebsmotor ein durch die Verspannung der Doppelkupplung erzeugtes Lastmoment sicher bereitstellen kann.

Zur Verdeutlichung der Erfindung ist der Beschreibung eine Zeichnung eines Ausführungsbeispiels beigefügt. In dieser zeigt

Fig. 1    eine schematische Darstellung eines Teildoppelkupplungsgetriebes zur Durchführung eines erfindungsgemäßen Verfahrens, und

Fig. 2    ein Ersatzschaltbild des Teildoppelkupplungsgetriebes.

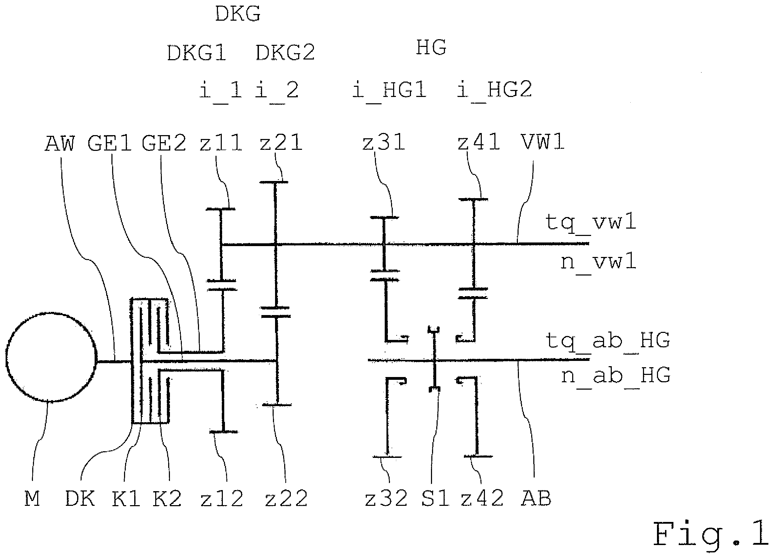

Demnach umfasst das in Fig. 1 gezeigte Teildoppelkupplungsgetriebe in Vorgelegebauweise ein als ein lastschaltbares Doppelkupplungsgetriebe DKG ausgebildetes erstes Teilgetriebe und ein als ein zugkraftunterbrechend schaltendes Hauptgetriebe HG ausgebildetes zweites Teilgetriebe. Das Doppelkupplungsgetriebe DKG weist eine Doppelkupplung DK mit einer ersten Kupplung K1 und einer zweiten Kupplung K2 auf. Eine Kupplungseingangsseite ist durch einen gemeinsamen Kupplungskorb gebildet, der mit einer Antriebswelle AW eines als Verbrennungsmotor ausgebildeten Antriebsmotors M verbunden ist.

Eine erste Getriebeeingangswelle GE1 ist an ihrem motorseitigen Ende mit der ersten Kupplung K1 und an ihrem getriebeseitigen Ende mit einem Zahnrad z22 fest verbunden. Das Zahnrad z22 steht im Eingriff mit einem auf einer Vorgelegewelle VW1 drehfest angeordneten Zahnrad z21. Das Zahnradpaar z21/z22 stellt eine zweite Eingangskonstante i_2 dar, die mit der ersten Kupplung K1 einen einstufigen zweiten Doppelkupplungsgetriebezweig DKG2 bildet.

Eine zweite Getriebeeingangswelle GE2 ist als eine kürzere Hohlwelle über der ersten Getriebeeingangswelle GE1 angeordnet. Sie ist an ihrem motorseitigen Ende mit der zweiten Kupplung K2 und an ihrem getriebeseitigen Ende mit einem Zahnrad z12 fest verbunden. Das Zahnrad z12 steht im Eingriff mit einem auf der Vorgelegewelle VW1 drehfest angeordneten Zahnrad z11. Das Zahnradpaar z11/z12 stellt eine der zweiten Eingangskonstanten i_2 vorgelagerte erste Eingangskonstante i_1 dar, die mit der zweiten Kupplung K2 einen einstufigen ersten Doppelkupplungsgetriebezweig DKG1 bildet. Das Doppelkupplungsgetriebe DKG entspricht in seiner Funktionsweise einer Splittergruppe für eine nachfolgende Getriebegruppe.

Dem Doppelkupplungsgetriebe DKG antriebstechnisch nachgeordnet ist ein zweistufiges Hauptgetriebe HG mit einem ersten Hauptgetriebegang i_HG1 und einem zweiten Hauptgetriebegang i_HG2. Der erste Hauptgetriebegang i_HG1 umfasst ein auf der Vorgelegewelle VW1 drehfest angeordnetes Zahnrad z31, das im Eingriff mit einem auf einer Abtriebswelle AB drehbar angeordneten Zahnrad z32 ist. Der zweite Hauptgetriebegang i_HG2 umfasst ein auf der Vorgelegewelle VW1 drehfest angeordnetes Zahnrad z41, das im Eingriff mit einem auf der Abtriebswelle AB drehbar angeordneten Zahnrad z42 ist. Die beiden Losräder z32, z42 sind über eine als Klauenkupplung ausgebildete unsynchronisierte Schalteinrichtung S1 wechselseitig mit der Abtriebswelle AB drehfest verbindbar. An der Vorgelegewelle VW1 liegt ein Antriebsmoment tq_vw1 mit einer Antriebsdrehzahl n_vw1 an. Am Ausgang des Hauptgetriebes HG und damit des Gesamtgetriebes liegt ein resultierendes Abtriebsmoment tq_ab_HG mit einer Abtriebsdrehzahl n_ab_HG an, welches auf die angetriebenen Fahrzeugräder bzw. Achsen wirkt.

Das gezeigte Teildoppelkupplungsgetriebe dient lediglich als vereinfachte Getriebestruktur zur Veranschaulichung des erfindungsgemäßen Verfahrens. Ein reales Nutzfahrzeug-Teildoppelkupplungsgetriebe kann beispielsweise zwei zweigängige Doppelkupplungsgetriebezweige und ein drei- oder viergängiges Hauptgetriebe aufweisen, so dass zwölf oder sechzehn Vorwärtsgänge und mindestens ein Rückwärtsgang zur Verfügung stehen.

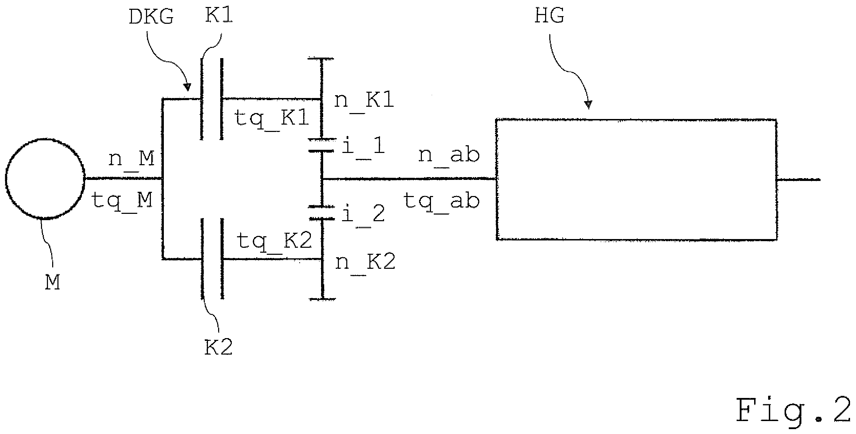

Zur Verdeutlichung der relevanten Drehmomente und Drehzahlen zeigt Fig. 2 ein Ersatzschaltbild der in Fig. 1 dargestellten Getriebestruktur. Danach ist über den Antriebsmotor M ein Antriebsmoment tq_M mit einer Motordrehzahl n_M übertragbar. Über die erste Kupplung K1 ist ein Kupplungsmoment tq_K1 übertragbar. Die Kupplungsausgangsseite dreht dabei mit einer Drehzahl n_K1. Über die zweite Kupplung K2 ist ein Kupplungsmoment tq_K2 übertragbar. Die Kupplungsausgangsseite dreht dabei mit einer Kupplungsdrehzahl n_K2. Am Ausgang des Doppelkupplungsgetriebe DKG beziehungsweise am Eingang des Hauptgetriebes HG ergibt sich ein Abtriebsmoment tq_ab und eine entsprechende Abtriebsdrehzahl n_ab.

Bei einem erfindungsgemäßen Verfahren zur Kennlinienadaption der Doppelkupplung DK werden die beiden Kupplungen K1 und K2 gegeneinander verspannt, wobei die eine Kupplung K1 oder K2 haftet und die andere Kupplung K1 oder K2 schlupft. Die Kennlinie der zu adaptierenden (schlupfenden) Kupplung K1, K2 wird dann mittels Durchfahren des Kupplungsstellweges in Schließrichtung, gegebenenfalls mit temporärem Verharren an relevanten Kupplungspositionen bzw. Momentpositionen, in an sich bekannter Weise, beispielsweise über die Auswertungen von Drehzahlgradienten, Kraftstoffeinspritzmengen, Drehmomentenvergleiche usw. ermittelt bzw. adaptiert.

Der Kupplung K1 wird zur Vereinfachung und Verdeutlichung der Betrachtungen von Drehmomenten und Drehzahlen im Folgenden, unabhängig von der Bezeichnung der Eingangskonstanten in Fig. 1, der Index "1" für die ihr zugeordnete Übersetzung i zugewiesen. Der Kupplung K2 wird dementsprechend der Index "2" für die ihr zugeordnete Übersetzung i zugewiesen.

Die Kupplungsmomente tq_K1 und tq_K2 bei in Neutral geschaltetem Hauptgetriebe HG können bei konstanter Drehzahl n_ab am Abtrieb AB des Doppelkupplungsgetriebes DKG aus der Erhaltungsgleichung der Kupplungsmomente und dem Motormoment tq_M (Drehmoment des Antriebsmotors M)

$$tq_{K1} + tq_{K2} = tq_M \qquad (Gl.1)$$

sowie der Drehmomentbilanz am Abtrieb

$$tq_{K1} \cdot i_1 + tq_{K2} \cdot i_2 = tq_{ab} = 0 \qquad (Gl.2)$$

abgeschätzt werden. Daraus ergibt sich für das Kupplungsmoment der Kupplung K2

$$tq_{K2} = -tq_{K1} \cdot \frac{i_1}{i_2} \qquad (Gl.3)$$

wenn sich die Kupplung K1 im Schlupf und die Kupplung K2 im Haften befindet, bzw. für das Kupplungsmoment der Kupplung K1

$$tq_{K1} = -tq_{K2} \cdot \frac{i_2}{i_1} \qquad (Gl.4)$$

wenn sich die Kupplung K2 im Schlupf und die Kupplung K1 im Haften befindet.

Diejenige Kupplung K1, K2, die während des Verfahrens permanent haften soll, muss also zumindest soweit geschlossen sein, dass sie ein Drehmoment gemäß den obigen Gleichungen Gl.3 bzw. Gl.4 übertragen kann.

Für das Motordrehmoment (Lastmoment am Antriebsmotor) tq_M1 bzw. tq_M2 und eine entsprechende Motordrehzahl n_M, das bzw. die benötigt wird, um einen bestimmten Kupplungswegpunkt oder einen Kennlinienabschnitt gemäß dem Verfahren adaptieren zu können, folgt aus der Gleichung

$$tq_{M2} = tq_{K1} \cdot \left(1 - \frac{i_1}{i_2}\right) \qquad (Gl.5),$$

wobei diese Gleichung Gl.5 das Lastmoment am Antriebsmotor angibt, wenn sich die Kupplung K1 im Schlupf und die Kupplung K2 im Haften befindet, beziehungsweise

$$tq_{M1} = -\left|tq_{K2}\right| \cdot \left(1 - \frac{i_2}{i_1}\right) \qquad \text{(Gl.6)},$$

wobei diese Gleichung Gl.6 das Lastmoment am Antriebsmotor angibt, wenn sich die Kupplung K2 im Schlupf und die Kupplung K1 im Haften befindet.

Grundsätzlich ist auch eine Erweiterung der Gleichungen für nicht konstante Abtriebsdrehzahlen n_ab am Doppelkupplungsgetriebe DKG, also für Drehzahlgradienten d/dt(n_ab) möglich, wobei dann allerdings zusätzlich relevante Massenträgheitsmomente zu berücksichtigen sind.

Besitzen ein oder beide Doppelkupplungsgetriebezweige DKG1, DKG2 mehr als einen Gang, so können für die Adaption präferierte, d.h. zu einer möglichst schnellen, verschleißarmen und/oder genauen Adaption führende Gänge eingelegt werden. Dabei sind allerdings zwei Aspekte zu berücksichtigen:

1. Mit Hilfe des Motormomentes tq_M1 bzw. tq_M2 kann die Kennlinie nicht direkt komplett adaptiert werden, da die Kupplungen K1, K2 gegenüber dem Antriebsmotor M stets eine Übertragungsreserve besitzen, die von den Übersetzungsverhältnissen abhängt. Der adaptierbare Bereich kann jedoch durch eine Nutzung der möglichen Übersetzungsverhältnisse der beiden Doppelkupplungsgetriebezweige so ausgedehnt werden, dass er maximal groß wird. Ein übersetzungsbedingter Verstärkungsfaktor, der auf die Übertragungsreserve erhöhend wirkt, soll daher durch eine geeignete Gangwahl möglichst klein eingestellt werden. Wenn die Kupplung K1 adaptiert wird und die Kupplung K2 haftet, sollte daher der Faktor $(1-i_2/i_1)$ möglichst klein werden, also i_2 möglichst groß und i_1 möglichst klein gewählt werden. Wenn die Kupplung K2 adaptiert wird und die Kupplung K1 haftet, sollte hingegen der Faktor $(1-i_1/i_2)$ möglichst klein werden, also i_1 möglichst groß und i_2 möglichst klein gewählt werden.

2. Durch die Adaption wird ein zusätzlicher Reibenergieeintrag in die zu adaptierende Kupplung K1, K2 eingebracht, der die Kupplung hinsichtlich Verschleiß und Erwärmung belastet. Durch die Erwärmung kann sich in ungünstigen Fällen während der Adaption der Reibwert der Reibbeläge der Kupplung K1, K2 ändern und das Adaptionsergebnis beeinträchtigen. Daher sollte die Reibleistung bei der Adaption möglichst gering sein. Da das Kupplungsmoment tq_K1, tq_K2 entlang der Kennlinie eingestellt und damit erzeugt werden muss, kann die Reibbelastung nur über die Drehzahldifferenz Δn_K12 bzw. Δn_K21, d.h. den Schlupf, an der Kupplung K1, K2 gering gehalten werden. Die Drehzahldifferenz ergibt sich aus der Motordrehzahl n_M und den Übersetzungsverhältnissen i_1, i_2 gemäß der Gleichung

$$\Delta n_{K12} = n_M \cdot \left(1 - \frac{i_1}{i_2}\right) \qquad \text{(Gl.7)},$$

wenn sich die Kupplung K1 im Schlupf und die Kupplung K2 im Haften befindet, beziehungsweise gemäß der Gleichung

$$\Delta n_{K21} = n_M \cdot \left(1 - \frac{i_2}{i_1}\right) \qquad \text{(Gl.8)},$$

wenn sich die Kupplung K2 im Schlupf und die Kupplung K1 im Haften befindet.

Die Drehzahldifferenz Δn_K12 bzw. Δn_K21 an der jeweiligen Kupplung kann minimiert werden, indem die Gänge so gewählt werden, dass die übersetzungsabhängigen Verstärkungsfaktoren möglichst klein werden. Wenn die Kupplung K1 adaptiert wird und die Kupplung K2 haftet, sollte daher der Faktor $(1-i_1/i_2)$ möglichst klein werden, also i_1 möglichst groß und i_2 möglichst klein gewählt werden. Wenn die Kupplung K2 adaptiert wird und die Kupplung K1 haftet, sollte hingegen der Faktor $(1-i_2/i_1)$ möglichst klein werden, also i_2 möglichst groß und i_1 möglichst klein gewählt werden.

Aus dieser Betrachtung ist ersichtlich, dass die Nutzung der Gänge der Doppelkupplungsgetriebezweige DKG1, DKG2 zur Maximierung der Größe des adaptierbaren Kennlinienbereichs einerseits und zur Minimierung der Kupplungsbelastung andererseits gegenläufig wirkt. Da die Darstellung des Drehmomentbereiches sinnvollerweise präferiert wird, ist eine Minimierung des Reibenergieeintrags durch eine Gangauswahl daher nur soweit durchführbar und zweckmäßig, wie die Darstellung des Drehmomentbereiches dies zulässt. Im Ergebnis ist es vorteilhaft, die Kennlinienadaption abschnittsweise durchzuführen, wobei für den jeweiligen Abschnitt eine geeignete Gangkombination ermittelt und beide Kupplungen in dem Abschnitt adaptiert werden, und mit den folgenden Abschnitten analog zu verfahren.

Bezugszeichenliste

| AB | Abtriebswelle |
|----|----|
| AW | Antriebswelle |
| DK | Doppelkupplung |
| DKG | Doppelkupplungsgetriebe |
| DKG1 | Doppelkupplungsgetriebezweig |
| DKG2 | Doppelkupplungsgetriebezweig |
| GE1 | Getriebeeingangswelle |
| GE2 | Getriebeeingangswelle |
| HG | Hauptgetriebe |
| i_1 | Eingangsübersetzung Doppelkupplungsgetriebezweig |
| i_2 | Eingangsübersetzung Doppelkupplungsgetriebezweig |
| i_HG1 | Hauptgetriebegang |
| i_HG2 | Hauptgetriebegang |
| K1 | Kupplung |
| K2 | Kupplung |
| M | Antriebsmotor |
| n_ab | Abtriebsdrehzahl am Doppelkupplungsgetriebe |
| n_ab_HG | Abtriebsdrehzahl am Hauptgetriebe |
| n_K1 | Kupplungsausgangsdrehzahl |
| n_K2 | Kupplungsausgangsdrehzahl |
| n_M | Motordrehzahl |
| S1 | Schaltkupplung, Klauenkupplung |
| tq_K1 | Kupplungsmoment an Kupplung K1 |
| tq_K2 | Kupplungsmoment an Kupplung K2 |
| tq_M | Drehmoment des Antriebsmotors |
| VW1 | Vorgelegewelle |
| z11 | Zahnrad |
| z12 | Zahnrad |
| z21 | Zahnrad |
| z22 | Zahnrad |
| z31 | Zahnrad |
| z32 | Zahnrad |
| z41 | Zahnrad |
| z42 | Zahnrad |

**Patentansprüche**

1. Verfahren zur Kennlinienadaption von Kupplungen in einem Teildoppelkupplungsgetriebe eines Fahrzeugs, beispielsweise eines Nutzfahrzeugs, mit einem als ein Doppelkupplungsgetriebe (DKG) ausgebildeten ersten Teilgetriebe, das eine Doppelkupplung (DK) mit einer ersten Kupplung (K1) und einer zweiten Kupplung (K2) aufweist, welche mit einem Antriebsmotor (M) wirkverbindbar sind, und mit einem dem Doppelkupplungsgetriebe (DKG) in einem Antriebsstrang antriebstechnisch nachgeordneten, als zugkraftunterbrechend schaltendes Hauptgetriebe (HG) ausgebildeten zweiten Teilgetriebe, **dadurch gekennzeichnet, dass** die Kennlinienadaption der ersten und der zweiten Kupplung (K1, K2) mit Hilfe einer Verspannung der beiden Kupplungen (K1, K2) durchgeführt wird, wobei sich das Hauptgetriebe (HG) in einer Neutralstellung befindet.

2. Verfahren nach Anspruch 1, **dadurch gekennzeichnet, dass** bei der Kennlinienadaption jeweils eine der beiden Kupplungen (K1, K2) im Haften betrieben wird, während die andere Kupplung (K1, K2) in Schließrichtung betätigt wird.

**3.** Verfahren nach Anspruch 1 oder 2, **dadurch gekennzeichnet, dass** die Kennlinienadaption in mehreren Schritten durchgeführt wird, wobei ein jeweiliger Zwischenstand abgespeichert wird.

**4.** Verfahren nach einem der Ansprüche 1 bis 3, **dadurch gekennzeichnet, dass** bedarfsweise mit Hilfe einer Diagnoseeinrichtung eine Adaptionsnotwendigkeit geprüft und erforderlichenfalls während einer folgenden geeigneten Neutralschaltung des Hauptgetriebes (HG) eine vollständige Kennlinienadaption durchgeführt wird.

**5.** Verfahren nach einem der Ansprüche 1 bis 4, **dadurch gekennzeichnet, dass** bei der Kennlinienadaption

a) die jeweils zu adaptierende Kupplung (K1, K2) vorab ausgewählt wird,
b) ein Momentverlauf bzw. Positionsverlauf der Doppelkupplung (DK) vorgegeben wird,
c) eine Berechnung des Kupplungsmomentes der schlupfenden Kupplung (K1, K2) unter Berücksichtigung einer Wechselwirkung der beiden Kupplungen (K1, K2) aufgrund der Verspannung beim Einlernen erfolgt, und
d) gegebenenfalls eine geeignete Gangkombination im Doppelkupplungsgetriebe (DKG) für die Kupplungsadaption vorgewählt wird.

**6.** Verfahren nach einem der Ansprüche 1 bis 5, **dadurch gekennzeichnet, dass** bei der Kennlinienadaption die Geschwindigkeit und/oder die Beschleunigung des Schließvorgangs der Kupplung (K1, K2), abhängig von relevanten Kennlinienabschnitten, Kennlinienstützstellen, Kupplungsbelastungen, Adaptionszeiten und/oder Adaptionsgenauigkeiten vorgegeben wird.

**7.** Verfahren nach einem der Ansprüche 1 bis 6, **dadurch gekennzeichnet, dass** der Schließvorgang der Kupplung (K1, K2) bei der Kennlinienadaption wahlweise kontinuierlich, gestuft, rampenartig oder einem anderem vorgegeben Verlauf folgend, durchgeführt wird.

**8.** Verfahren nach einem der Ansprüche 1 bis 7, **dadurch gekennzeichnet, dass** die Kennlinienstützstellen durch bestimmte Kupplungspositionen definiert sind.

**9.** Verfahren nach einem der Ansprüche 1 bis 8, **dadurch gekennzeichnet, dass** die Kennlinienstützstellen durch bestimmte Kupplungsmomente definiert sind.

**10.** Verfahren nach einem der Ansprüche 1 bis 9, **dadurch gekennzeichnet, dass** während der Kennlinienadaption eine vorab bestimmte Drehzahl des Antriebsmotors (M) konstant gehalten wird.

**Claims**

**1.** Method for adapting a characteristic curve of clutches in a partial double-clutch transmission of a vehicle, for example of a utility vehicle, having a first partial transmission which is embodied as a double-clutch transmission (DKG) and has a double clutch (DK) with a first clutch (K1) and a second clutch (K2) which can be operatively connected to a drive engine (M), and having a second partial transmission which is arranged downstream, in terms of drive technology, of the double-clutch transmission (DKG) in a drive train and is embodied as a main transmission (HG) which shifts in a traction-force-interrupting fashion, **characterized in that** the adaptation of the characteristic curve of the first and second clutches (K1, K2) is carried out using tension of the two clutches (K1, K2), wherein the main transmission (HG) is in a neutral position.

**2.** Method according to Claim 1, **characterized in that** during the adaptation of the characteristic curve in each case one of the two clutches (K1, K2) is operated in a state of adhesion, while the other clutch (K1, K2) is activated in the closing direction.

**3.** Method according to Claim 1 or 2, **characterized in that** the adaptation of the characteristic curve is carried out in a plurality of steps, wherein a respective intermediate state is stored.

**4.** Method according to one of Claims 1 to 3, **characterized in that** a need for adaptation is checked according to demand using a diagnostic device, and if necessary a complete adaptation of the characteristic curve is carried out during a following suitable neutral shifting operation of the main transmission (HG).

5. Method according to one of Claims 1 to 4, **characterized in that** during the adaptation of the characteristic curve

   a) the clutch (K1, K2) which is to be respectively adapted is selected in advance,
   b) a torque profile or position profile of the double clutch (DK) is predefined,
   c) the clutch torque of the slipping clutch (K1, K2) is calculated taking into account an interaction between the two clutches (K1, K2) on the basis of the tension during the learning process, and
   d) if appropriate a suitable gear speed combination is preselected in the double-clutch transmission (DKG) for the clutch adaptation.

6. Method according to one of Claims 1 to 5, **characterized in that** during the adaptation of the characteristic curve the speed and/or the acceleration of the closing process of the clutch (K1, K2) is predefined as a function of relevant characteristic curve sections, characteristic curve reference points, clutch loads, adaptation times and/or adaptation accuracy levels.

7. Method according to one of Claims 1 to 6, **characterized in that** the closing process of the clutch (K1, K2) during the adaptation of the characteristic curve is optionally carried out continuously, in a stepped fashion, in a ramp-like fashion or following another predefined profile.

8. Method according to one of Claims 1 to 7, **characterized in that** the characteristic curve reference points are defined by specific clutch positions.

9. Method according to one of Claims 1 to 8, **characterized in that** the characteristic curve reference points are defined by specific clutch torques.

10. Method according to one of Claims 1 to 9, **characterized in that** a rotational speed of the drive engine (M) which is determined in advance is kept constant during the adaptation of the characteristic curve.

**Revendications**

1. Précédé d'adaptation de la courbe caractéristique d'embrayages dans une demi-boîte de vitesses à double embrayage d'un véhicule, en particulier d'un véhicule utilitaire, avec une première demi-boîte de vitesses constituée par une boîte de vitesses à double embrayage (DKG), qui présente un double embrayage (DK) avec un premier embrayage (K1) et un second embrayage (K2), qui peuvent être activement reliés à un moteur d'entraînement (M), et avec une seconde demi-boîte de vitesses disposée en liaison d'entraînement après la boîte de vitesses à double embrayage (DKG) dans une chaîne cinématique et constituée par une boîte de vitesses principale (HG) se commutant en interrompant la force de traction, **caractérisé en ce que** l'on effectue l'adaptation de la courbe caractéristique du premier et du second embrayages (K1, K2) à l'aide d'un serrage des deux embrayages (K1, K2), dans lequel la boîte de vitesses principale (HG) se trouve dans une position neutre.

2. Procédé selon la revendication 1, **caractérisé en ce que**, lors de l'adaptation de la courbe caractéristique, on fait respectivement fonctionner un des deux embrayages (K1, K2) en position collée tandis que l'on actionne l'autre embrayage (K1, K2) dans la direction de fermeture.

3. Procédé selon la revendication 1 ou 2, **caractérisé en ce que** l'on effectue l'adaptation de la courbe caractéristique en plusieurs étapes, dans lequel on mémorise un état intermédiaire respectif.

4. Procédé selon l'une quelconque des revendications 1 à 3, **caractérisé en ce que** l'on vérifie au besoin la nécessité d'une adaptation à l'aide d'un dispositif de diagnostic et si nécessaire on effectue une adaptation complète de la courbe caractéristique pendant une mise en position neutre appropriée suivante de la boîte de vitesses principale (HG).

5. Procédé selon l'une quelconque des revendications 1 à 4, **caractérisé en ce que**, lors de l'adaptation de la courbe caractéristique,

   a) on sélectionne au préalable l'embrayage (K1, K2) qui doit respectivement être adapté,

b) on prédétermine une allure de couple ou une allure de position du double embrayage (DK),

c) on effectue un calcul du couple d'embrayage de l'embrayage qui patine (K1, K2) en tenant compte d'une interaction des deux embrayages (K1, K2) du serrage lors de l'apprentissage, et

d) éventuellement on présélectionne une combinaison de vitesses appropriée dans la boîte de vitesses à double embrayage (DKG) pour l'adaptation de l'embrayage.

6. Procédé selon l'une quelconque des revendications 1 à 5, **caractérisé en ce que**, lors de l'adaptation de la courbe caractéristique, on prédétermine la vitesse et/ou l'accélération de l'opération de fermeture de l'embrayage (K1, K2) en fonction de parties pertinentes de la courbe caractéristique, de points d'appui de la courbe caractéristique, de charges de l'embrayage, de temps d'adaptation et/ou de précisions d'adaptation.

7. Procédé selon l'une quelconque des revendications 1 à 6, **caractérisé en ce que** l'on exécute l'opération de fermeture de l'embrayage (K1, K2) lors de l'adaptation de la courbe caractéristique au choix de façon continue, de façon étagée, sous forme progressive ou suivant une autre allure prédéterminée.

8. Procédé selon l'une quelconque des revendications 1 à 7, **caractérisé en ce que** les points d'appui de la courbe caractéristique sont définis par des positions déterminées de l'embrayage.

9. Procédé selon l'une quelconque des revendications 1 à 8, **caractérisé en ce que** les points d'appui de la courbe caractéristique sont définis par des couples déterminés de l'embrayage.

10. Procédé selon l'une quelconque des revendications 1 à 9, **caractérisé en ce que** l'on maintient constant un nombre de tours déterminé au préalable du moteur d'entraînement (M), pendant l'adaptation de la courbe caractéristique.

Fig.1

Fig.2

EP 2 619 481 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102005033027 A1
- DE 102006054281 A1
- DE 102008043384 A1
- DE 102008008496 A1